# EUROPEAN PATENT APPLICATION

(11) **EP 4 613 584 A1**
(43) Date of publication of application: **10.09.2025**
(21) Application number: 24161964.2
(22) Date of filing: 07.03.2024
(51) Int. Cl.: B60T 17/00, B01D 53/26

(54) **AIR DRYER CARTRIDGE, AIR DRYER, VEHICULAR AIR TREATMENT SYSTEM AND VEHICLE**

(71) Applicant: ZF CV Systems Europe BV, 1170 Brüssel (BE)
(72) Inventor: KOSTRZEWA, Kamil, 52-233 Wroclaw (PL); SEMENIUK, Maciej, 58-506 Jelenia Gora (PL)
(74) Representative: Copi, Joachim

(57) **Abstract**

The invention relates to an air dryer cartridge (10) for an air dryer (40) of a vehicular air treatment system (50), the air dryer cartridge (10) comprising: a desiccant container (11) containing a desiccant (12), a cartridge base (13) configured to be arranged on a cartridge interface (41) of the air dryer (40), an inner housing (14) connected to the cartridge base (13), the inner housing (14) receiving the desiccant container (11), and an outer housing (15) surrounding the inner housing (14), wherein an air flow channel (16) is formed between the outer housing (15) and the inner housing (14), wherein the inner housing (14) and the cartridge base (13) form a central mounting section (17) with a connecting element (18) configured to be connected to an air flow connector (42) of the air dryer (40) and wherein the air dryer cartridge (10) comprises a built-in sealing element (19) arranged at the central mounting section (17) configured to seal the air dryer cartridge (10) against the air flow connector (42). Furthermore, the invention relates to an air dryer (40) for a vehicular air treatment system (50), to a vehicular air treatment system (50) and to a vehicle (60) comprising a vehicular air treatment system (50).

## Description

The present disclosure relates to an air dryer cartridge for an air dryer of a vehicular air treatment system. Furthermore, the present disclosure relates to an air dryer for a vehicular air treatment system, to a vehicular treatment system comprising an air dryer and to a vehicle comprising a vehicular treatment system.

The air dryer cartridge may comprise a desiccant container containing a desiccant and a cartridge base configured to be arranged on a cartridge interface of the air dryer. In addition, the air dryer cartridge may comprise an inner housing connected to the cartridge base, the inner housing receiving the desiccant container. Furthermore, the air dryer cartridge may comprise an outer housing surrounding the inner housing, wherein an air flow channel is formed between the outer housing and the inner housing.

Air dryer cartridges of the afore-mentioned type are generally known. For instance, US 2018 / 0 257 025 A1 discloses a desiccant cartridge for drying and de-oiling a gaseous fluid, and a method for flow guidance within the desiccant cartridge. The desiccant cartridge and a housing having positioned therein an inner pot in which an oil separating medium for oil particles contained in the fluid and a desiccant for drying the gaseous fluid are arranged one after the other in the direction of the housing longitudinal axis. The housing has a housing base having a centrally arranged inlet for the fluid to be dried and de-oiled and having eccentrically arranged outlet openings for the dried and de-oiled fluid. During normal operation of the desiccant cartridge, the gaseous fluid guided into the desiccant cartridge via the central inlet is first guided in a flow through the oil separating medium and then through the desiccant.

According to current practice, maintenance processes for replacing the air dryer cartridge on an air dryer of a vehicular air treatment system may turn out to be time-consuming and cumbersome due to the need of an accurate sealing of the air dryer cartridge against the air dryer body. For instance, an o-ring may be provided and assembled to the air dryer cartridge or to the air dryer to ensure proper sealing between these components.

It may be desirable to provide technical approaches which allow for an increased efficiency of maintenance processes for cartridge-based air dryer concepts. In view of the above, it is a general object of the present invention to address one or more of the disadvantages associated with the prior art. In particular, it is an object of the present invention to provide an air dryer cartridge which is easy to install on an air dryer in a time-efficient manner. It is a further object of the present invention to provide a respective air dryer, a respective vehicular air treatment system and a respective vehicle.

Aspects and embodiments of the invention provide an air dryer cartridge for an air dryer of a vehicular air treatment system, an air dryer for a vehicular air treatment system, a vehicular treatment system comprising an air dryer and a vehicle comprising a vehicular treatment system as indicated in the appended claims.

According to a first aspect of the present invention, there is provided an air dryer cartridge for an air dryer of a vehicular air treatment system, the air dryer cartridge comprising:
- a desiccant container containing a desiccant;
- a cartridge base configured to be arranged on a cartridge interface of the air dryer;
- an inner housing connected to the cartridge base, the inner housing receiving the desiccant container; and
- an outer housing surrounding the inner housing, wherein an air flow channel is formed between the outer housing and the inner housing;
wherein the inner housing and the cartridge base form a central mounting section with a connecting element configured to be connected to an air flow connector of the air dryer and wherein the air dryer cartridge comprises a built-in sealing element arranged at the central mounting section configured to seal the air dryer cartridge against the air flow connector.

In conclusion, an air dryer cartridge with a structurally integrated sealing component is provided which is intended to fulfill a sealing function between the air dryer cartridge and the cartridge interface of the air dryer in a central mounting area, thus eliminating the need to provide and install a separate sealing element between the air dryer cartridge and the cartridge interface. Hence, maintenance processes may be efficiently improved, leading to less maintenance effort and time, lower cost and easier serviceability. The air dryer cartridge according to the suggested features assists to provide a compact air dryer arrangement. Furthermore, improved tightness between the air dryer cartridge and the cartridge interface may be achieved, in particular in view of a reduced risk of a deficient placement of a separately provided sealing element as an additional assembly component.

Within the present disclosure, an air dryer cartridge may generally be a structural unit for receiving and drying compressed air in order to provide dried compressed air to a recipient. The air dryer cartridge may be operable in a drying mode and in a regeneration mode. In the drying mode, a humid compressed air flow may be guided through the desiccant of the air dryer cartridge, wherein the desiccant is configured to adsorb moisture from the humid compressed air flow. Since the desiccant may reach a saturated condition after having adsorbed a certain level of moisture, the desiccant may be regenerated in the regeneration mode. In the regeneration mode, a comparatively dry regeneration air flow is guided through the desiccant which consequently may desorb moisture to the regeneration air flow. Subsequently, the regeneration air flow may be vented from the air dryer cartridge. The desiccant may, for instance, be a suitable adsorbent as e.g. zeolite. Since the desiccant may be prone to degradation, the air dryer cartridge may be configured to be exchangeable and may be replaced, for instance, after a certain amount of drying and regeneration cycles.

The air dryer cartridge comprises a central mounting section formed by the inner housing and the cartridge base of the air dryer cartridge. The central mounting section may be arranged in a substantively central area of the cartridge base level. The central mounting section may be configured to geometrically and structurally fit to the air flow connector of the air dryer. As indicated above, the central mounting section may comprise a connecting element configured to be connected to the air flow connector of the air dryer. The connecting element may, for instance, be a mechanical connector such as e.g. a thread, a screw fastening or a clip element.

As indicated above, the air dryer cartridge may comprise an inner housing receiving the desiccant container and an outer housing surrounding the inner housing, wherein an air flow channel is formed between the outer housing and the inner housing. The air flow channel may extend circumferentially around the inner housing. The air flow channel may form at least one of an air inflow channel to the desiccant container and an air outflow channel from the desiccant container depending on a present drying mode or regeneration mode and depending on a selected flow configuration, which may be a regular flow configuration or a reversed flow configuration. For instance, when the air dryer cartridge is operated in the drying mode according to the regular flow configuration, the air flow channel may form an air inflow channel for guiding compressed air to be dried from at least one air flow aperture provided in the cartridge base to the desiccant container. For instance, when the air dryer cartridge is operated in the regeneration mode according to the regular flow configuration, the air flow channel may form an air outflow channel for guiding humid regeneration air from the desiccant container to at least one air flow aperture provided in the cartridge base. For instance, when the air dryer cartridge is operated in the drying mode according to the reversed flow configuration, the air flow channel may form an air outflow channel for guiding dried compressed air from the desiccant container to the air dryer via at least one air flow aperture provided in the cartridge base. For instance, when the air dryer cartridge is operated in the regeneration mode according to the reversed flow configuration, the air flow channel may form an air inflow channel for guiding dry regeneration air from the air dryer to the desiccant container via at least one air flow aperture provided in the cartridge base.

Within the present disclosure, the air dryer comprises a cartridge interface on which the air dryer cartridge may be placed and fixed by a suitable fastening element. The cartridge interface and the air dryer cartridge, in particular the air dryer cartridge base, may be designed in a geometrically and structurally compatible manner. As indicated above, the air dryer may comprise an air flow connector, which may be part of the cartridge interface and may form a structural counterpart for the central mounting section of the air dryer cartridge. The air flow connector may comprise a connector air flow channel, which may form at least one of an air inlet and an air outlet. For instance, when the air dryer cartridge is operated in the drying mode according to the regular flow configuration, the connector flow channel may form an air outlet for guiding dried compressed air to a compressed air supply port. For instance, when the air dryer cartridge is operated in the regeneration mode according to the regular flow configuration, the connector flow channel may form an air inlet for guiding dry regeneration air to the desiccant container. For instance, when the air dryer cartridge is operated in the drying mode according to the reversed flow configuration, the connector air flow channel may form an air inlet for guiding humid compressed air to the desiccant container of the air dryer cartridge. For instance, when the air dryer cartridge is operated in the regeneration mode according to the reversed flow configuration, the connector air flow channel may form an air outlet for guiding humid regeneration air from the desiccant container to an exhaust provided by the air dryer.

In accordance with the first aspect of the invention, the air dryer cartridge comprises a built-in sealing element arranged at the central mounting section configured to seal the air dryer cartridge against the air flow connector. The built-in sealing element may be arranged at the central mounting section such that it abuts the air flow connector without interfering the fastening function of the central mounting section.

According to an embodiment of the first aspect of the present invention, the built-in sealing element may be an o-ring. By this, a low-cost built-in sealing element with reliable sealing properties and easy implementation is provided. Alternatively, it may conceivable to use sealing elements of other geometries, e.g. an x-ring or a d-ring. The central mounting section of the air dryer cartridge may be designed in a geometrically compatible manner according to the selected sealing element, thus ensuring a tight seat of the built-in sealing element.

According to an embodiment of the first aspect of the present invention, at least one of the cartridge base and the inner housing may comprise a recess configured to hold the built-in sealing element. By this, a simplified assembly and a firm hold of the built-in sealing element may be beneficially promoted. For instance, the recess may be configured as a groove, in particular a circumferential groove. The recess may comprise an angle or a radius, particularly depending on the geometry of the applied built-in sealing element. According to a first variant of the embodiment, the inner housing may comprise the recess, thus allowing the cartridge base to focus on the mechanical connecting function for attaching the air dryer cartridge to the cartridge interface. According to a second variant of the embodiment, the cartridge base may comprise the recess, thus efficiently combining the mechanical connecting function with the sealing function. According to a third variant of the embodiment, the inner housing and the cartridge base may form a common groove, thus evenly sharing the sealing function.

According to an embodiment of the first aspect of the present invention, the built-in sealing element may abut the connecting element on a connecting element edge oriented towards the desiccant container. By this, it is ensured that the built-in sealing element does not interfere with the connecting element, thus supporting reliable connecting and sealing functions. For instance, the connecting element may be configured as a thread and the built-in sealing element may be arranged on an upper thread end which is oriented away from the cartridge interface. For instance, the built-in sealing element may be arranged directly adjacent to the top of the connecting element, e.g. on a thread top of the connecting element configured as a thread.

According to an embodiment of the first aspect of the present invention, the cartridge base may comprise the connecting element and the inner housing may comprise the built-in sealing element. Thus, the cartridge base and the inner housing forming the central mounting section comprise separated functions regarding connection and sealing. By this, a simplified construction leading to an enhanced assembly may be provided and each of the cartridge base and the inner housing may be optimized regarding its individually predefined function.

According to an embodiment of the first aspect of the present invention, the cartridge base may comprise a connecting section with an L-shaped profile, wherein the inner housing may comprise a projection engaging with the connecting section. By this, an interlacing section of the cartridge base and the inner housing is formed, thus beneficially providing improved tightness and stability. For instance, the projection may reach into an angle or a radius of the L-shaped connecting section. The connecting element of the air dryer cartridge may be positioned in or on the connecting section.

According to a refined embodiment, the built-in sealing element may abut the L-shaped profile of the connecting section. By this, a compact arrangement may be provided. For instance, the built-in sealing element may adjoin an end of a leg of the L-shaped profile configured to face the air flow connector of the air dryer. Thus, a space-saving and tightness-promoting direct transition from the connection section to the built-in sealing element may be provided.

According to an embodiment of the first aspect of the present invention, the built-in sealing element may be formed integrally with the inner housing or with the cartridge base. By this, an increased integration level with reduced assembly effort may be provided. For instance, such an inner housing or cartridge base with an integral built-in sealing element may be produced by two-component injection molding.

According to an embodiment of the first aspect of the present invention, the air dryer cartridge may comprise an air distribution cavity arranged in a bottom part of the inner housing between the central mounting section and the desiccant container and the built-in sealing element may be arranged between the air distribution cavity and the connecting element of the central mounting section. By this, the built-in sealing element may be efficiently placed close to a critical cartridge area with passing air flows. The afore-mentioned air distribution cavity may be a free space between the desiccant container and a bottom part of the inner housing, wherein the bottom part is oriented towards the cartridge base. Air flows may be guided through the air distribution cavity between the connector air flow channel of the air flow connector and the desiccant container, wherein the air distribution cavity may, for instance, promote an even distribution of the air flows towards the desiccant container. For instance, if the connecting element of the central mounting section is configured as a thread, the built-in sealing element may be arranged between the air distribution cavity and a thread top of the thread, wherein the thread top faces the desiccant container. Optionally, the built-in sealing element may be shielded by an inner housing edge between the built-in sealing element and the air distribution cavity, thus reducing a direct air flow impact on the built-in sealing element and consequently preserving its functional integrity. The addressed inner housing edge may furthermore contribute to forming a recess for the sealing element. According to a further option, the air distribution cavity may comprise a deflector configured to distribute an air flow among the desiccant container surface for improved air flow distribution, and the built-in sealing element may be arranged between the deflector and the connecting element.

According to an embodiment of the first aspect of the present invention, the connecting element may be a thread. By this, the air dryer cartridge may be easily fastened to the air dryer.

According to an embodiment of the first aspect of the present invention, the air dryer cartridge may be configured to be operated according to a reversed flow configuration, in which the air flow channel forms an air outflow channel from the desiccant container when the air dryer cartridge is operated in a drying mode and in which the air flow channel forms an air inflow channel to the desiccant container when the air dryer cartridge is operated in a regeneration mode. By this, the built-in sealing element provides the further advantage to prevent water of entering the connecting element. If the connecting element is a thread comprising thread coils, potential corrosion leading to impaired detachability may be beneficially prevented according to the suggested embodiment.

According to a second aspect of the present invention, there is provided an air dryer for a vehicular air treatment system, the air dryer comprising a cartridge interface with an air flow connector, the cartridge interface being configured to receive an air dryer cartridge according to at least one of the afore-mentioned features and the air flow connector being configured to be connected to the connecting element of the central mounting section of the air dryer cartridge.

With the suggested air dryer according to the second aspect of the present invention, a suitable air dryer may be provided in order to achieve the afore-mentioned object of the invention, thus efficiently improving maintenance processes and leading to less maintenance effort and time, lower cost and easier serviceability. Furthermore, a compact air dryer arrangement and improved tightness between the air dryer and an air dryer cartridge may be achieved.

In particular, the suggested air dryer may be adapted to receive the afore-mentioned air dryer cartridge with a built-in sealing element at the central mounting section, e.g. by providing a suitable sealing surface configured to abut the built-in sealing element of the air dryer cartridge upon assembly. Furthermore, the air flow connector may, for instance, comprise a counter thread which may be configured to engage with the connection element of the air dryer cartridge, if the connection element is a thread. The counter thread may be arranged circumferentially on an outer surface of the air flow connector. Optionally, the air dryer may furthermore comprise a removable cover configured to cover the air dryer cartridge, thus providing enhanced cartridge protection from environmental conditions.

According to an embodiment of the second aspect of the present invention, the air flow connector may comprise a connector recess configured to receive the built-in sealing element of the air dryer cartridge. By this, the air flow connector may be adapted for an improved fitting and sealing with the air dryer cartridge. The connector recess may be configured to partially receive the built-in sealing element, thus providing additional support for the built-in sealing element of the air dryer cartridge. In other words, the connector recess provided at the air flow connector may be configured to contact an exposed surface of the built-in sealing element, thus contributing to a circumferential enclosure of the built-in sealing element. For instance, the connector recess may form a counterpart to a recess provided in the air dryer cartridge for receiving the built-in sealing element.

According to a refined embodiment, the air flow connector may comprise an air flow opening section with an expanded cross-section and the connector recess may be arranged in a level of the expanded cross-section. In other words, the air flow connector may comprise a connector air flow channel which widens towards an air dryer cartridge received by the cartridge interface, thus improving air distribution of air flows being guided through the air flow connector in the direction of the air dryer cartridge. Since a connector wall of the air flow connector may comprise a decreasing thickness in the area of an expanded cross-section, the assembly of the built-in sealing element to the air flow connector in a production step may be simplified and the built-in sealing element may contribute mechanical stability and increased tightness in this area.

According to a third aspect of the present invention, there is provided a vehicular air treatment system comprising an air dryer according to at least one of the afore-mentioned features and an air dryer cartridge according to at least one of the afore-mentioned features. With the suggested vehicular air treatment system according to the third aspect of the present invention, a suitable vehicular air treatment system may be provided in order to achieve the afore-mentioned object of the invention, thus efficiently improving maintenance processes and leading to less maintenance effort and time, lower cost and easier serviceability. Furthermore, a vehicular air treatment system with a compact air dryer arrangement and improved tightness between the air dryer and an air dryer cartridge may be achieved. The vehicular air treatment system may be part of a compressed air supply system of a vehicle configured to supply compressed air to at least one of a compressed air buffer and a compressed air device of the vehicle. For instance, the compressed air device may be an air suspension system or a pneumatic brake system. The compressed air supply system may comprise a compressor. The vehicular air treatment system may be configured to receive and dry compressed air received by the compressor and to supply the dried compressed air to at least one of the compressed air buffer and the compressed air device.

According to a fourth aspect of the present invention, there is provided a vehicle comprising the afore-mentioned vehicular air treatment system. With the suggested vehicle according to the fourth aspect of the present invention, a suitable vehicle may be provided in order to achieve the afore-mentioned object of the invention, thus efficiently improving maintenance processes and leading to less maintenance effort and time, lower cost and easier serviceability. Furthermore, a vehicle with a compact air dryer arrangement and improved tightness between the air dryer and an air dryer cartridge may be achieved.

The described vehicle may be a motor vehicle of any type designed to transport people and/or cargo. In particular, the vehicle may be a commercial vehicle as e.g. a truck or a bus. For commercial vehicles, the advantage of an efficiently improved maintenance process may, due to the presence of an air treatment system and a comparatively frequent exchange of the air dryer cartridge, significantly increase the operating efficiency of the vehicle. Hence, the present invention may be beneficially applicable to commercial vehicles.

The above and other characteristics will become clear from the following description of illustrative, non-restrictive examples, which will be further outlined with reference to the appended drawings. The drawings are not necessarily to scale. Some features could be exaggerated or minimized to show details of particular components. Therefore, specific structural and functional details disclosed herein are not to be interpreted as limiting, but merely as a representative basis for teaching one skilled in the art.
- Fig. 1: shows a schematic sectional view of an air dryer cartridge mounted to a partially visible air dryer according to an embodiment.
- Fig. 2: depicts an enlarged schematic view of a lower part of the air dryer cartridge mounted to the air dryer according to Fig. 1.
- Fig. 3: provides the enlarged schematic view according to Fig. 2 amended by a visualization of air flows of the air dryer cartridge operated in a drying mode according to a reversed flow configuration.
- Fig. 4: schematically illustrates a side view of a vehicle comprising a vehicular air treatment system according to an embodiment.

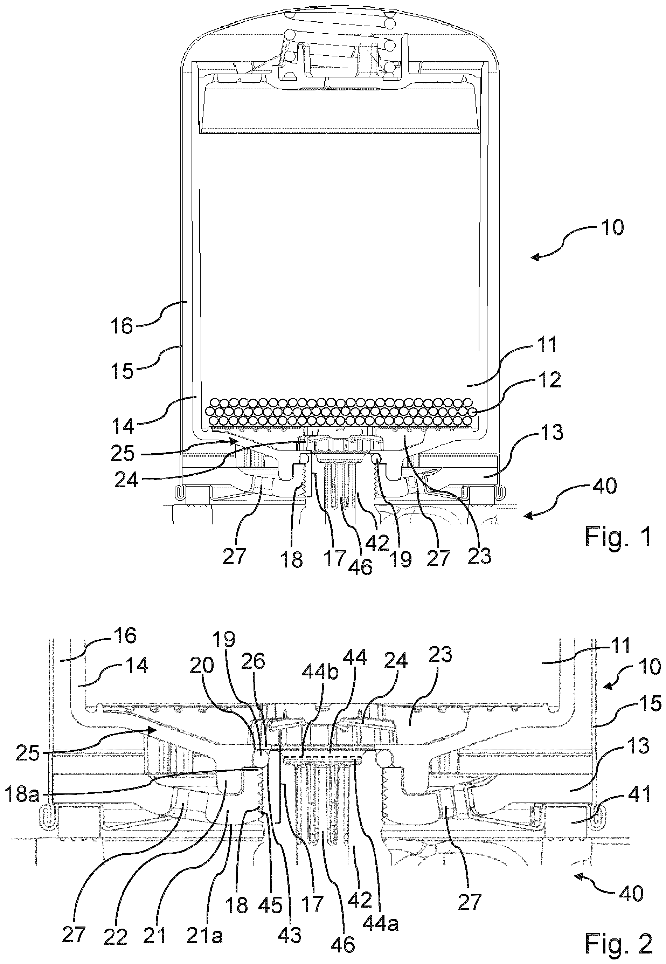

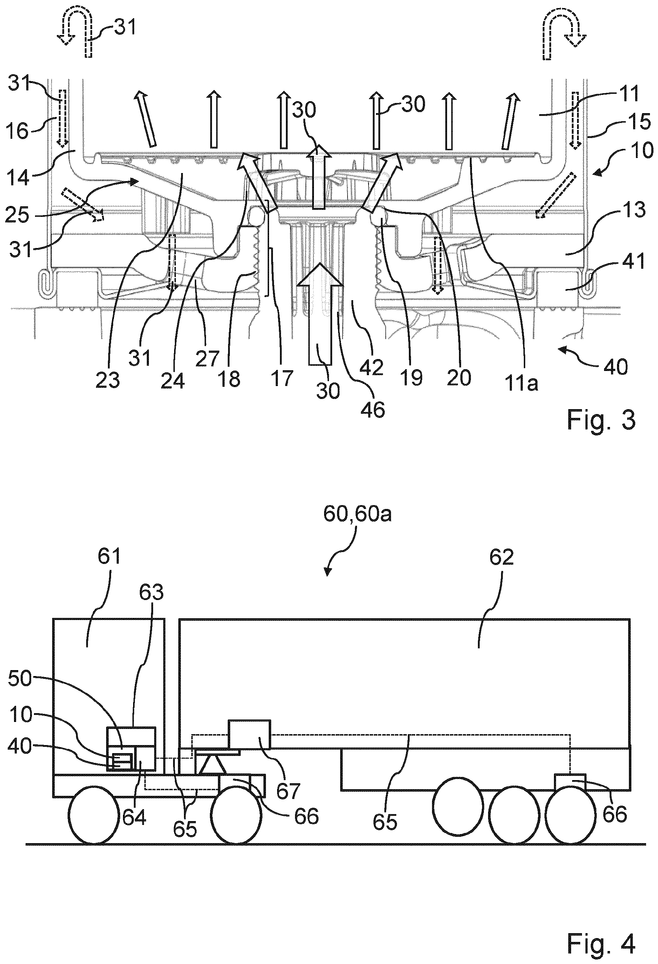

Fig. 1 schematically illustrates an air dryer cartridge 10 for an air dryer 40 of a vehicular air treatment system 50 schematically indicated in Fig. 4. Figs. 2 and 3 provide enlarged schematic views of a lower part of the air dryer cartridge 10 and the partially visible air dryer 40. Hence, the illustrated embodiment will be described in the following with reference to Figs. 1, 2 and 3 collectively.

As depicted in Fig. 1, the air dryer cartridge 10 comprises a desiccant container 11 containing a desiccant 12, e.g. a zeolite. In order to provide an enhanced overview, the enlarged views of the air dryer cartridge 10 in Figs. 2 and 3 do not show the desiccant 12.

The illustrated air dryer cartridge 10 comprises a cartridge base 13 configured to be arranged on a cartridge interface 41 of the air dryer 40 as depicted in Figs. 2 and 3. As apparent from Figs. 1 to 3, the illustrated air dryer cartridge 10 comprises an inner housing 14 connected to the cartridge base 13, the inner housing 14 receiving the desiccant container 11. Furthermore, the air dryer cartridge 10 comprises an outer housing 15 surrounding the inner housing 14, wherein in air flow channel 16 is formed between the outer housing 15 and the inner housing 14. The air flow channel 16 may extend circumferentially around the inner housing 14.

As illustrated in Figs. 1 to 3, the inner housing 14 and the cartridge base 13 form a central mounting section 17 with a connecting element 18 connected to an air flow connector 42 of the air dryer 40. The air flow connector 42 comprises a connector air flow channel 46 which may serve as an air inlet or an air outlet depending on the air dryer cartridge 10 being operated in a dryer mode or a regeneration mode. The connecting element 18 is implemented as a thread according to the depicted embodiment and it is configured to engage with a counter thread 45 (see Fig. 2) provided on the air flow connector 42. Furthermore, the air dryer cartridge 10 comprises a built-in sealing element 19 arranged at the central mounting section 17. The built-in sealing element 19 is configured to seal the air dryer cartridge 10 against the air flow connector 42. According to the depicted embodiment, the built-in sealing element 19 is implemented as an o-ring, thus forming a low-cost built-in sealing element 19 with reliable sealing properties. Alternative, not depicted embodiments may comprise other sealing geometries or built-in sealing elements 19 formed integrally with the inner housing 14 or with the cartridge base 13, e.g. being produced by two-component injection molding.

According to Figs. 2 and 3 it is apparent that the inner housing 14 comprises a recess 20 configured to hold the built-in sealing element 19, thus ensuring a firm hold of the built-sealing element 19 and facilitating the assembly of the air dryer cartridge 10. For instance, the recess 20 may be implemented as a circumferential groove in the inner housing 14. According to the illustrated embodiment, the cartridge base 13 comprises the connecting element 18 and the inner housing 14 comprises the built-in sealing element 19, thus providing structurally separated functions regarding connection and sealing. As furthermore depicted in Fig. 2, the air flow connector 42 comprises a connector recess 43 for partially receiving the built-in sealing element 19 and forming a counterpart to the recess 20 of the air dryer cartridge 10. The connector recess 43 is arranged in a level 44b of an expanded cross-section 44a of an air flow opening section 44 of the air flow connector 42, thus providing increased tightness in this area by means of the built-in sealing element 19 received by the connector recess 43.

According to the embodiment illustrated in Fig. 2, the built-in sealing element 19 abuts the connecting element 18 on a connecting element edge 18a oriented towards the desiccant container 11. In other words, the built-in sealing element 19 is arranged on a thread top of the connecting element 18 implemented as a thread, thus enhancing the tightness of the connection but not interfering with the connection function of the connecting element 18.

As apparent from Fig. 2, the cartridge base 13 comprises a connecting section 21 with an L-shaped profile 21a according to the depicted embodiment. Furthermore, the inner housing 14 comprises a projection 22 engaging with the connecting section 21, thus forming an interlacing section of the cartridge base 13 and the inner housing 14 for improved tightness and stability. The built-in sealing element 19 abuts the L-shaped profile 21a of the connecting section 21 for providing a space-saving and tightness-promoting direct transition from the connection section 21 to the built-in sealing element 19.

The air dryer cartridge 10 according to the embodiment depicted in Figs. 1 to 3 comprises an air distribution cavity 23 arranged in a bottom part 25 of the inner housing 14. The air distribution cavity 23 is arranged between the central mounting section 17 and the desiccant container 11 of the air dryer cartridge 10. The air distribution cavity 23 may be defined as a free space between the desiccant container 11 and the bottom part 25 of the inner housing 14 and it may be configured to distribute air flows among a desiccant container surface 11a (see Fig. 3). The air flow distribution may be further enhanced by the illustrated deflector 24. The built-in sealing element 19 is arranged between the air distribution cavity 23 and the connecting element 18 of the central mounting section 17. The built-in sealing element 19 may be shielded by an inner housing edge 26 (see Fig. 2), which reduces a direct air flow impact on the built-in sealing element 19.

Fig. 3 provides a schematic visualization of air flows of the air dryer cartridge 10 operated in a drying mode according to a reversed flow configuration. As illustrated, a humid compressed air inflow 30 flows through the connector air flow channel 46 of the air flow connector 42 of the air dryer 40 and enters the air distribution cavity 23, in which it is distributed and additionally deflected by means of the deflector 24 over the desiccant container surface 11a. The desiccant container surface 11a may comprise a suitable permeability or structured apertures such that the humid compressed air inflow 30 may enter the desiccant container 11 and flow through the desiccant 12 depicted in Fig. 1 for being dried. In an upper part of the desiccant container 11, a dried compressed air outflow 31 leaves the desiccant 12 and is deflected towards the outer housing 15 of the air dryer cartridge 10. Consequently, the dried compressed air outflow 31 flows through the air flow channel 16 back to the lower part of the air dryer cartridge 10. Hence, the air flow channel 16 may form an air outflow channel in the drying mode according to the reversed flow configuration. The dried compressed air outflow 31 may leave the air dryer cartridge 10 and enter a guiding structure of the air dryer 40 via at least one air flow aperture 27 as illustrated. Generally, the illustrated air flows of the air dryer cartridge 10 may be reversed when the air dryer cartridge 10 is operated in a regeneration mode according to the reversed flow configuration. Furthermore, the depicted visualization of air flows according to Fig. 3 may also apply to a regeneration mode according to a regular flow configuration, wherein the air inflow 30 would be an airflow of dry regeneration air and the air outflow would be an airflow of humid regeneration air.

Due to the built-in sealing element 19, the air dryer cartridge 10 presented in Figs. 1 to 3 is easy to install on the air dryer 40 in a time-efficient manner. The air dryer cartridge 10 with the built-in sealing element 19 eliminates the need to provide and install a separate sealing element between the air dryer cartridge 10 and the cartridge interface 41. Hence, maintenance processes may be efficiently improved, leading to less maintenance effort and time, lower cost and easier serviceability. Furthermore, a compact dryer arrangement with improved tightness between the air dryer cartridge 10 and the cartridge interface 41 can be achieved according to the illustrated aspects and embodiments.

Fig. 4 provides a schematic side view of a vehicle 60 configured as a commercial vehicle 60a, namely a truck with a towing unit 61 and a trailer unit 62. The vehicle 60 comprises a vehicular air treatment system 50, wherein the vehicular air treatment system 50 comprises an air dryer cartridge 10 connected to an air dryer 40. The vehicular air treatment system 50 may be part of a compressed air supply system 63 with a compressor 64 configured to supply compressed air via at least one compressed air line 65 to at least one of a compressed air buffer 67 and a compressed air device 66 of the vehicle 60. For instance, the compressed air device 66 may be an air suspension system or a pneumatic brake system. The vehicular air treatment system 50 may be configured to receive and dry compressed air received by the compressor 64 and to supply the dried compressed air to at least one of the compressed air buffer 67 and the compressed air device 66. The air dryer 40 and the air dryer cartridge 10 implemented in the vehicular air treatment system 50 may be configured according to at least one of the features described in relation to Figs. 1 to 3, thus beneficially enhancing the vehicular air treatment system 50 and the vehicle 60 with regard to their maintenance properties.

### List of reference numerals (part of the application)

- 10: air dryer cartridge
- 11: desiccant container
- 11a: desiccant container surface
- 12: desiccant
- 13: cartridge base
- 14: inner housing
- 15: outer housing
- 16: air flow channel
- 17: central mounting section
- 18: connecting element
- 18a: connecting element edge
- 19: built-in sealing element
- 20: recess
- 21: connecting section
- 21a: L-shaped profile
- 22: projection
- 23: air distribution cavity
- 24: deflector
- 25: bottom part
- 26: inner housing edge
- 27: air flow aperture
- 30: humid compressed air inflow
- 31: dried compressed air outflow
- 40: air dryer
- 41: cartridge interface
- 42: air flow connector
- 43: connector recess
- 44: airflow opening section
- 44a: expanded cross-section
- 44b: level of expanded cross-section
- 45: counter thread
- 46: connector air flow channel
- 50: vehicular air treatment system
- 60: vehicle
- 60a: commercial vehicle
- 61: towing unit
- 62: trailer unit
- 63: compressed air supply system
- 64: compressor
- 65: compressed air line
- 66: compressed air device
- 67: compressed air buffer

## Claims

1. An air dryer cartridge (10) for an air dryer (40) of a vehicular air treatment system (50), the air dryer cartridge (10) comprising:
- a desiccant container (11) containing a desiccant (12);
- a cartridge base (13) configured to be arranged on a cartridge interface (41) of the air dryer (40);
- an inner housing (14) connected to the cartridge base (13), the inner housing (14) receiving the desiccant container (11); and
- an outer housing (15) surrounding the inner housing (14), wherein an air flow channel (16) is formed between the outer housing (15) and the inner housing (14);
wherein the inner housing (14) and the cartridge base (13) form a central mounting section (17) with a connecting element (18) configured to be connected to an air flow connector (42) of the air dryer (40) and wherein the air dryer cartridge (10) comprises a built-in sealing element (19) arranged at the central mounting section (17) configured to seal the air dryer cartridge (10) against the air flow connector (42).

2. The air dryer cartridge (10) according to claim 1, wherein the built-in sealing element (19) is an o-ring.

3. The air dryer cartridge (10) according to claim 1 or 2, wherein at least one of the cartridge base (13) and the inner housing (14) comprises a recess (20) configured to hold the built-in sealing element (19).

4. The air dryer cartridge (10) according to any preceding claim, wherein the built-in sealing element (19) abuts the connecting element (18) on a connecting element edge (18a) oriented towards the desiccant container (11).

5. The air dryer cartridge (10) according any preceding claim, wherein the cartridge base (13) comprises the connecting element (18) and the inner housing (14) comprises the built-in sealing element (19).

6. The air dryer cartridge (10) according to any preceding claim, wherein the cartridge base (13) comprises a connecting section (21) with an L-shaped profile (21a) and wherein the inner housing (14) comprises a projection (22) engaging with the connecting section (21).

7. The air dryer cartridge (10) according to claim 6, wherein the built-in sealing element (19) abuts the L-shaped profile (21a) of the connecting section (21).

8. The air dryer cartridge (10) according to any preceding claim, wherein the built-in sealing element (19) is formed integrally with the inner housing (14) or with the cartridge base (13).

9. The air dryer cartridge (10) according to any preceding claim, wherein the air dryer cartridge (10) comprises an air distribution cavity (23) arranged in a bottom part (25) of the inner housing (14) between the central mounting section (17) and the desiccant container (11) and wherein the built-in sealing element (19) is arranged between the air distribution cavity (23) and the connecting element (18) of the central mounting section (17).

10. The air dryer cartridge (10) according to any preceding claim, wherein the connecting element (18) is a thread.

11. The air dryer cartridge (10) according to any preceding claim, wherein the air dryer cartridge (10) is configured to be operated according to a reversed flow configuration, in which the air flow channel (16) forms an air outflow channel from the desiccant container (11) when the air dryer cartridge (10) is operated in a drying mode and in which the air flow channel (16) forms an air inflow channel to the desiccant container (11) when the air dryer cartridge (10) is operated in a regeneration mode.

12. An air dryer (40) for a vehicular air treatment system (50), the air dryer (40) comprising a cartridge interface (41) with an air flow connector (42), the cartridge interface (41) being configured to receive an air dryer cartridge (10) according to any one of claims 1 to 11 and the air flow connector (42) being configured to be connected to the connecting element (18) of the central mounting section (17) of the air dryer cartridge (10).

13. The air dryer (40) according to claim 12, wherein the air flow connector (42) comprises a connector recess (43) configured to receive the built-in sealing element (19) of the air dryer cartridge (10).

14. The air dryer (40) according to claim 13, wherein the air flow connector (42) comprises an air flow opening section (44) with an expanded cross-section (44a) and wherein the connector recess (43) is arranged in a level (44b) of the expanded cross-section (44a).

15. A vehicular air treatment system (50) comprising an air dryer (40) according to any one of claims 12 to 14 and an air dryer cartridge (10) according to any one of claims 1 to 11.

16. A vehicle (60) comprising a vehicular air treatment system (50) according to claim 15.
